# FASCICULE DE BREVET EUROPEEN

(11) **EP 2 753 810 B1**
(45) Date de publication et mention de la délivrance du brevet: **07.11.2018**
(21) Numéro de dépôt: 12754030.0
(22) Date de dépôt: 07.09.2012
(51) Int. Cl.: F02C 7/25, A62C 3/08

(54) **BOUCLIER PARE FLAMME PERFECTIONNÉ**
VERBESSERTE FLAMMHEMMENDE ABSCHIRMUNG
IMPROVED FLAME RESISTANT SHIELD

(30) Priorité: 09.09.2011 FR 1158015
(43) Date de publication de la demande: 16.07.2014
(73) Titulaire: ArianeGroup SAS, 75015 Paris (FR)
(72) Inventeur: PLAINDOUX, Cédric, F-33200 Bordeaux (FR); SCHERS, Simon, F-33160 Saint Medard En Jalles (FR); MOURA, Benjamin, F-33000 Bordeaux (FR)
(74) Mandataire: Ipside
(86) Numéro de dépôt international: PCT/EP2012/067531
(87) Numéro de publication internationale: WO 2013/034704

(56) Documents cités:
- EP-A1- 0 411 845
- WO-A2-2009/134299
- GB-A- 2 468 484
- US-A- 3 779 006

## Description

La présente invention concerne un bouclier pare flamme torche utilisé en aéronautique pour protéger l'environnement immédiat des chambres de combustion de moteurs. Elle concerne également une nacelle de moteur d'aéronef équipée d'un tel bouclier pare flamme.

Il est connu d'utiliser un bouclier pare flamme pour protéger les organes vitaux d'un aéronef tels que l'arrivée de kérosène, les conduites hydrauliques et conduites électriques, susceptibles d'être exposés à des flammes torches. Ce bouclier pare flamme est généralement placé sur les mats réacteurs d'un aéronef, le moteur étant un moteur à turbine à gaz ou analogue.

La flamme torche correspond à une fuite accidentelle de gaz de combustion hors de la chambre de combustion. Typiquement, les gaz sont à des températures élevées avoisinant les 1600°C avec une pression de quelques dizaines de bars. Cette température est suffisamment haute pour engendrer des dommages aux organes vitaux environnants.

Ce bouclier pare flamme devant résister à une exposition accidentelle à une flamme torche, les spécifications de ce type de bouclier sont, en conséquence, très strictes:
- température de gaz de 1650°C, le gaz étant certainement oxydant,
- pression à la source de la flamme de 37 bars,
- distance du bouclier par rapport à la source de la flamme de 120 mm,
- diamètre de flamme à la source de 25,4 mm,
- durée d'exposition de 3 minutes, temps pendant lequel le bouclier ne doit pas laisser passer la flamme, sa face opposée à la flamme devant rester à une température pas trop élevée.

De plus, le bouclier pare-flamme doit pouvoir résister, dans des conditions normales d'utilisation, à un environnement extrême et supporter ainsi des températures de l'ordre de 400°C.

Il doit également présenter un encombrement minima, soit une épaisseur inférieure typiquement à 6 mm, tout en présentant une masse la plus faible possible pour des applications dans le domaine aéronautique.

Le bouclier pare flamme de l'état de l'art est constitué typiquement d'une paroi coupe feu en tantale traité contre l'oxydation, d'isolants thermiques à base de fibres céramiques, notamment d'amiante, imprégnées de résine telle qu'une résine phénolique, et éventuellement d'un support.

La couche de Tantale a une épaisseur de l'ordre de 0,4 mm tandis que la couche d'amiante a une épaisseur de 3,18 mm.

Or, ces boucliers pare flamme ne peuvent garantir une tenue en continu à 300°C car il n'existe à ce jour aucune résine organique qui ne se décompose pas lorsqu'elle est exposée à une telle température.

De plus, on constate que ces boucliers pare flamme de l'art antérieur vieillissent rapidement ce qui nécessite des remplacements plus fréquents et coûteux.

Lors du démontage d'un tel bouclier pare flamme, ayant été en service pendant un certain temps, on peut observer la disparition du liant.

Les fibres d'amiantes ayant perdu leur liant, celles-ci tombent en poussière lors du démontage.

Le traitement de ces boucliers est donc une source de problème environnemental en raison de l'extrême nocivité des particules d'amiante qui peuvent ainsi être dispersées.

Un tel bouclier pare flamme n'est bien entendu plus apte à protéger les organes vitaux de l'aéronef.

Les documents EP0411845 A1 et WO2009/134299 A2 présentent des boucliers pare flamme connus.

La présente invention vise à répondre aux inconvénients de l'art antérieur ci-dessus rappelés en proposant un bouclier pare-flamme, simple dans sa conception et dans son mode opératoire, conforme aux exigences environnementales actuelles, en particulier, étant dépourvu d'amiante et compatible de la spécification de tenue aux conditions d'ambiance.

A cet effet, l'invention concerne un bouclier pare flamme apte à être utilisé en aéronautique pour la protection d'un environnement immédiat des chambres de combustion de moteurs. Selon l'invention, ce bouclier comprend deux parois opposées entre lesquelles sont placées au moins :
- une première couche isolante, ladite première couche étant apte à diffuser la chaleur dans le plan formée par ladite couche en étant isolante dans son épaisseur,
- une deuxième couche isolante,
- une desdites parois opposées qui recouvre ladite première couche, étant réalisée dans un matériau réfractaire antioxydant ou dont au moins la face destinée à être exposée aux flammes est recouverte d'un matériau empêchant l'oxydation de cette face,
- l'autre paroi étant un support.

Alors que la paroi réfractaire et stable d'un point de vue oxydatif est destinée à être exposé à des flammes torches, la paroi support est destinée à être placée à proximité de l'objet à protéger de la chaleur.

Avantageusement, la conductivité thermique de la première couche isolante dans le plan formé par celle-ci permet de limiter la formation de point chaud sur le bouclier. En effet, la flamme torche étant par définition locale, le rôle de la première couche isolante est d'étaler la zone chauffée par la flamme torche, ce qui permet de remplacer une isolation locale par une isolation de surface plus grande, donc de faire travailler davantage l'isolant et d'augmenter son efficacité.

Dans différents modes de réalisation particuliers de ce bouclier pare flamme, chacun ayant ses avantages particuliers et susceptibles de nombreuses combinaisons techniques possibles:
- les première et deuxième couches isolantes sont dépourvues de liant tel qu'une résine,
- la première couche isolante est réalisée dans un matériau conducteur orthotrope,
De préférence, la conductivité thermique radiale est supérieure à 100 W.m⁻¹.K⁻¹ à 20 °C, et encore mieux à 140 W.m⁻¹.K⁻¹ à 20 °C tandis que la conductivité thermique axiale est inférieure à 10 W.m⁻¹.K⁻¹ à 20 °C, et encore mieux à 6 W.m⁻¹.K⁻¹ à 20 °C.
On entend par "conductivité thermique axiale", la conductivité mesurée dans le sens de la compression du bouclier pare flamme, et par "conductivité thermique radiale", la conductivité mesurée dans le sens transverse au sens de compression du bouclier pare flamme.
De préférence, il est réalisé en graphite tel que du Papyex®.
- ladite deuxième couche isolante est une couche isolante ayant une conductivité thermique inférieure à 1 W.m⁻¹.K⁻¹ à 20 °C.
De préférence, cette deuxième couche isolante présente une conductivité thermique inférieure à 0,05 W.m⁻¹.K⁻¹ à 20 °C, et encore mieux inférieure ou égale à 0,025 W.m⁻¹.K⁻¹ à 20°C.
Cette deuxième couche isolante peut être réalisée dans des fibres minérales telles que des fibres de verre, de silice amorphe ou encore des combinaisons de ces éléments. Les fibres d'amiante en sont exclues.
Cette deuxième couche isolante peut être un panneau isolant microporeux tel que le panneau pour isolation thermique à haute température commercialisé par la société Microtherm®. Un tel panneau isolant microporeux présente une conductivité thermique inférieure à 0,022 W.m⁻¹.K⁻¹ à température ambiante.
- le support étant réalisé dans un alliage de Titane, il a une épaisseur supérieure ou égale à 0,6 mm,
- le bouclier comprend des fixations pour solidariser l'ensemble du bouclier.
Ces fixations comportent avantageusement chacune un insert permettant de contrôler l'épaisseur des couches prises entre les parois opposées. Chaque insert est avantageusement placé directement entre les deux parois opposées.

L'invention concerne également une nacelle de moteur équipée d'un bouclier pare flamme tel que décrit précédemment.

De préférence, cette nacelle étant une tuyère de moteur d'aéronef, le bouclier pare flamme est placé entre l'appareillage à combustion du moteur et les parties de l'aéronef à protéger.

L'invention sera décrite plus en détail en référence aux dessins annexés dans lesquels:
- la figure 1 est une vue en coupe transversale d'un bouclier pare flamme selon un mode de réalisation particulier de l'invention, le bouclier étant représenté en vue éclatée et sans ses organes d'assemblage par soucis de clarté;
- la figure 2 est une vue partielle élargie et en coupe transversale d'un bouclier pare flamme au niveau d'un de ses organes d'assemblage ;

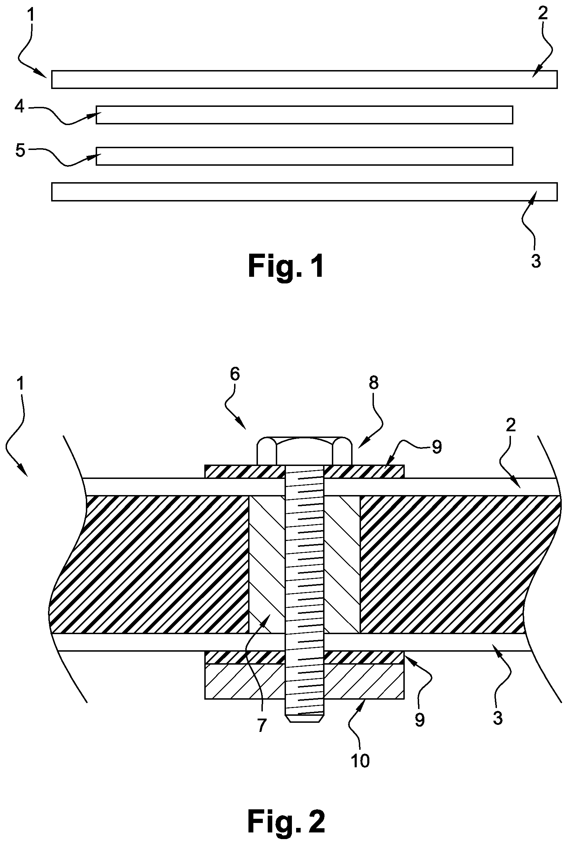

Les Figures 1 et 2 représente schématiquement un bouclier pare flamme 1 selon un mode de réalisation préféré de la présente invention.

Ce bouclier pare flamme comprend une feuille 2 de métal réfractaire dont les deux faces ont été traitées avec un matériau empêchant l'oxydation de cette feuille 2 lorsque celle-ci est exposée à une flamme torche.

Ce bouclier pare flamme 1 comprend également une autre feuille 3 servant de support. Entre ces deux feuilles 2, 3 sont prises un ensemble de couches 4, 5.

La face de la feuille 2 opposée à celle destinée à être exposée à l'attaque de la flamme torche est en contact avec une première couche 4 isolante. Cette première couche 4 isolante est apte à diffuser la chaleur dans le plan formée par cette couche en étant isolante dans son épaisseur. De préférence, cette première couche 4 isolante est réalisée dans un matériau conducteur orthotrope.

Une deuxième couche 5 isolante est en contact avec la feuille 3 servant de support. De préférence, cette deuxième couche 5 isolante est réalisée dans des produits minéraux sans résine afin de ne pas avoir de problème de vieillissement en température.

Les couches isolantes 4, 5 étant sans résine, elles n'ont donc aucune tenue mécanique. Puisque les propriétés d'isolation thermique de ces couches isolantes 4, 5 dépendent directement de leur densité, des éléments d'assemblage 6 du bouclier formant des entretoises, sont placés directement en contact avec les parois opposées 2, 3 pour contrôler l'épaisseur des couches 4, 5 prises entre ces parois opposées, y compris sous charges mécaniques.

De préférence, la feuille 2 de métal réfractaire est faite de Molybdène, les deux faces de cette feuille étant traitées au Silicate de Bore.

La première couche 4 isolante est en Papyex®, ce qui permet de prendre avantage des propriétés conductrices orthotropes de ce matériau.

La deuxième couche 5 isolante est un panneau isolant microporeux à haute performance à base de silice, tel que celui commercialisé sous le nom de Microtherm®. La feuille 3 servant de support est un alliage de Titane tel que le TA6V (Ti-6AI-4V).

Dans un mode de mise en oeuvre particulier de la présente invention, la feuille 2 de métal réfractaire en Molybdène a une épaisseur de 1 mm, ses deux faces étant traitées au Silicate de Bore sur une épaisseur de 0,1 mm.

La première couche 4 isolante est réalisée en Papyex®, référence NZ 998 commercialisé par la société CARBONE LORRAINE, lequel a une teneur en carbone supérieure à 93,8 % et une résistance en température en atmosphère oxydante d'au moins 500°C. Cette première couche 4a une épaisseur de 1 mm.

La deuxième couche 5 isolante qui a une épaisseur de 3 mm, est réalisée en Microtherm®, référence Super G commercialisé par la société MICROTHERM, lequel a une conductivité thermique de 0,0221 W/m.K à 100°C et une masse surfacique de 15,7 kg/m².

La feuille 3 servant de support a une épaisseur de 0,6 mm. Le bouclier 1 a une épaisseur totale théorique de 5,8 mm et une épaisseur réelle comprise entre 5,8 mm et 6 mm du fait des éventuelles dispersions des épaisseurs de chaque couche.

La figure 2 est une vue partielle, élargie et en coupe transversale d'un bouclier pare flamme au niveau d'un de ses organes d'assemblage 6. Par soucis de clarté, les différentes couches isolantes n'ont pas été différenciées. Les éléments de la Figure 2 portant les mêmes références que les éléments de la Figure 1 représentent les mêmes objets qui ne seront pas décrits de nouveau ci-dessous.

Ces organes d'assemblage 6 du bouclier pare flamme garantissent le contrôle de l'épaisseur des couches prises entre les parois opposées 2, 3, et ainsi la densité de chaque couche isolante ce qui assure la conservation des propriétés d'isolation thermique de chacune de ces couches.

Ces organes d'assemblage 6 pour solidariser l'ensemble du bouclier comportent chacun :
- un insert 7 creux ayant une forme cylindrique, interposé directement entre les parois opposées 2, 3, et
- une vis 8, des rondelles 9 et un écrou 10 permettant de solidariser les différents éléments constitutifs du bouclier.

L'insert 7 creux est donc intégré dans l'épaisseur de l'empilement formé par les différentes couches isolantes 4, 5 en ayant ses extrémités directement en contact avec les parois opposées 2, 3. La distance séparant ces parois 2, 3 est ainsi avantageusement contrôlée.

A titre purement illustratif, les rondelles 9 sont des gazes de silice de masse volumique 150 Kg/m³. L'insert 7 creux est en matériau à très basse densité (TBD) c'est-à-dire une densité inférieure à 80 Kg/m³.

La vis 8 et l'écrou 10 sont réalisés en Titane ou encore mieux en Molybdène protégé contre l'oxydation.

Ces organes d'assemblage 6 sont avantageusement placés sur le pourtour du bouclier 1.

## Revendications

1. Bouclier pare flamme apte à être utilisé en aéronautique pour la protection d'un environnement immédiat des chambres de combustion de moteurs, **caractérisé en ce qu'**il comprend deux parois opposées entre lesquelles sont placées au moins :
- une première couche (4) isolante, ladite première couche (4) étant apte à diffuser la chaleur dans le plan formée par ladite couche en étant isolante dans son épaisseur,
- une deuxième couche (5) isolante,
- une (2) desdites parois opposées qui recouvre ladite première couche (4), étant réalisée dans un matériau réfractaire antioxydant ou dont au moins la face destinée à être exposée aux flammes est recouverte d'un matériau empêchant l'oxydation de cette face,
- l'autre paroi (3) étant un support.

2. Bouclier selon la revendication 1, **caractérisé en ce que** lesdites première et deuxième couches (4, 5) isolantes sont dépourvues de résine.

3. Bouclier selon revendication 1 ou 2, **caractérisé en ce qu'**il comporte des fixations (6) pour solidariser l'ensemble du bouclier.

4. Bouclier selon la revendication 3, **caractérisé en ce que** lesdites fixations comprennent chacune un insert (7) placé directement entre les deux parois opposées (2, 3).

5. Bouclier selon l'une quelconque des revendications 1 à 4, **caractérisé en ce que** ladite première couche (4) isolante est réalisée dans un matériau conducteur orthotrope.

6. Bouclier selon la revendication 5, **caractérisé en ce que** la conductivité thermique radiale de ladite première couche (4) est supérieure à 100 W.m⁻¹.K⁻¹ à 20 °C tandis que sa conductivité thermique axiale est inférieure à 10 W.m⁻¹.K⁻¹ à 20 °C.

7. Bouclier selon l'une quelconque des revendications 1 à 6, **caractérisé en ce que** ladite deuxième couche (5) isolante a une conductivité thermique inférieure à 1 W.m⁻¹.K⁻¹ à 20 °C.

8. Bouclier selon la revendication 7, **caractérisé en ce que** ladite deuxième couche (5) présente une masse surfacique de 15,7 kg/m².

9. Bouclier selon l'une quelconque des revendications 1 à 8, **caractérisé en ce que** le support (3) étant réalisé dans un alliage de Titane, il a une épaisseur supérieure ou égale à 0,6 mm.

10. Nacelle de moteur équipée d'un bouclier pare flamme selon l'une quelconque des revendications 1 à 9.

## Patentansprüche

1. Flammabschirmung, geeignet zur Verwendung in der Luftfahrt zum Schutz einer unmittelbaren Umgebung von Triebwerksbrennkammern, **dadurch gekennzeichnet, dass** sie zwei gegenüberliegende Wände umfasst, zwischen denen mindestens Folgendes angeordnet ist:
- eine erste Isolierschicht (4), wobei die erste Schicht (4) dazu geeignet ist, Wärme in der durch die Schicht gebildeten Ebene zu verteilen, und dabei in ihrer Dicke isolierend wirkt,
- eine zweite Isolierschicht (5),
- eine (2) der gegenüberliegenden Wände, die die erste Schicht (4) bedeckt und aus einem antioxidativen feuerfesten Material gebildet ist oder von der zumindest die Seite, die dazu bestimmt ist, Flammen ausgesetzt zu werden, mit einem Material bedeckt ist, das die Oxidation dieser Seite verhindert,
- wobei die andere Wand (3) ein Träger ist.

2. Abschirmung nach Anspruch 1, **dadurch gekennzeichnet, dass** die erste und zweite Isolierschicht (4, 5) kein Harz enthalten.

3. Abschirmung nach Anspruch 1 oder 2, **dadurch gekennzeichnet, dass** sie Befestigungselemente (6) zur Befestigung der gesamten Abschirmung enthält.

4. Abschirmung nach Anspruch 3, **dadurch gekennzeichnet, dass** die Befestigungselemente jeweils einen Einsatz (7) umfassen, der direkt zwischen den beiden gegenüberliegenden Wänden (2, 3) angeordnet ist.

5. Abschirmung nach einem der Ansprüche 1 bis 4, **dadurch gekennzeichnet, dass** die erste Isolierschicht (4) aus einem orthotropen leitenden Material gebildet ist.

6. Abschirmung nach Anspruch 5, **dadurch gekennzeichnet, dass** die radiale Wärmeleitfähigkeit der ersten Schicht (4) größer als 100 W.m⁻¹.K⁻¹ bei 20 °C ist, während ihre axiale Wärmeleitfähigkeit kleiner als 10 W.m⁻¹.K⁻¹ bei 20 °C ist.

7. Abschirmung nach einem der Ansprüche 1 bis 6, **dadurch gekennzeichnet, dass** die zweite Isolierschicht (5) eine Wärmeleitfähigkeit von weniger als 1 W.m⁻¹.K⁻¹ bei 20 °C aufweist.

8. Abschirmung nach Anspruch 7, **dadurch gekennzeichnet, dass** die zweite Schicht (5) eine Flächenmasse von 15,7 kg/m² aufweist.

9. Abschirmung nach einem der Ansprüche 1 bis 8, **dadurch gekennzeichnet, dass** der Träger (3) aus einer Titanlegierung gebildet ist und eine Dicke größer oder gleich 0,6 mm aufweist.

10. Triebwerksgondel mit Flammabschirmung nach einem der Ansprüche 1 bis 9.

## Claims

1. Flame resistant shield capable of being used in aeronautics to protect an immediate environment of engine combustion chambers, **characterised in that** it comprises two opposing walls, between which are placed at least:
- one first insulating layer (4), said first layer (4) being capable of diffusing the heat in the plane formed by said layer by being insulating in the thickness thereof,
- one second insulating layer (5),
- one (2) of said opposing walls which covers said first layer (4), being made of an antioxidant refractory material, or of which at least the face intended to be exposed to flames is covered with a material that prevents the oxidation of this face,
- the other wall (3) being a support.

2. Shield according to claim 1, **characterised in that** said first and second insulating layers (4, 5) have no resin.

3. Shield according to claim 1 or 2, **characterised in that** it comprises fastenings (6) to rigidly connect the whole of the shield.

4. Shield according to claim 3, **characterised in that** said fastenings each comprise an insert (7) placed directly between the two opposing walls (2, 3).

5. Shield according to any one of claims 1 to 4, **characterised in that** said first insulating layer (4) is made of an orthotropic conductive material.

6. Shield according to claim 5, **characterised in that** the radial thermal conductivity of said first layer (4) is greater than 100W.m⁻¹.K⁻¹ at 20°C, whereas the axial thermal conductivity thereof is less than 10W.m⁻¹.K⁻¹ at 20°C.

7. Shield according to any one of claims 1 to 6, **characterised in that** said second insulating layer (5) has a thermal conductivity of less than 1W.m⁻¹.K⁻¹ at 20°C.

8. Shield according to claim 7, **characterised in that** said second layer (5) has a surface mass of 15.7kg/m².

9. Shield according to any one of claims 1 to 8, **characterised in that** with the support (3) being made of a titanium alloy, it has a thickness greater than or equal to 0.6mm.

10. Engine nacelle equipped with a flame resistant shield according to any one of claims 1 to 9.
